# EUROPÄISCHE PATENTSCHRIFT

(11) **EP 3 642 528 B1**
(45) Veröffentlichungstag und Bekanntmachung des Hinweises auf die Patenterteilung: **06.03.2024**
(21) Anmeldenummer: 18731069.3
(22) Anmeldetag: 12.06.2018
(51) Int. Cl.: F17C 1/00, F17C 1/16, B60K 15/00

(54) **TANK EINES KRAFTFAHRZEUGES MIT VOLUMENELEMENT**
TANK OF A MOTOR VEHICLE HAVING VOLUME ELEMENT
RÉSERVOIR D'UN VÉHICULE AUTOMOBILE COMPORTANT UN ÉLÉMENT VOLUMIQUE

(30) Priorität: 22.06.2017 DE 102017210574
(43) Veröffentlichungstag der Anmeldung: 29.04.2020
(73) Patentinhaber: Kautex Textron GmbH & Co. KG, 53229 Bonn (DE)
(72) Erfinder: HARMS, Daniel, 53721 Siegburg (DE); WEISS, Gernot, 53819 Neunkirchen-Seelscheid (DE); BOUFFIER, Roman, 53639 Königswinter (DE); ARRAS, Emmanuel, 80636 München (DE); HUBER, Markus, 80995 München (DE); FROHWEIN, Axel, 85375 Neufahrn (DE); FARKAS, Attila, 80937 München (DE)
(74) Vertreter: Richly & Ritschel Patentanwälte PartG mbB
(86) Internationale Anmeldenummer: PCT/EP2018/065484
(87) Internationale Veröffentlichungsnummer: WO 2018/234099

(56) Entgegenhaltungen:
- EP-A2- 1 028 017
- DE-A1- 3 918 073
- DE-A1-102008 046 586
- DE-A1-102014 223 826
- DE-A1-102016 105 043
- US-A- 4 714 093
- US-A- 5 944 217
- US-A1- 2006 107 827
- US-A1- 2015 167 886

## Beschreibung

Die Erfindung betrifft einen Tank in einem Kraftfahrzeug zur Aufnahme einer Flüssigkeit, insbesondere Kraftstoff. Der Tank weist ein gasgefülltes Volumenelement mit veränderbarem Volumen auf.

Kohlenwasserstoffemissionen aus Kraftstofftanks müssen aufgrund ihrer umweltschädigenden Wirkung weitestgehend vermieden werden. Kohlenwasserstoffdämpfe entstehen aufgrund des hohen Partialdrucks der Kohlenwasserstoffe im Kraftstoff, insbesondere bei höheren Temperaturen. Drei wesentliche Prozesse führen zum potentiellen Austreten von Kohlenwasserstoffdämpfen aus dem Kraftstofftank. Ein Prozess ist die Permeation der Kohlenwasserstoffmoleküle durch die Außenwandung des Tanks. Dieser Prozess ist weitestgehend verstanden und vorhandene Lösungen führen zu einer ausreichenden Reduktion der Emission. Ein zweiter Prozess ist der Betankungsprozess. Das Füllen des Tanks mit flüssigem Kraftstoff erfordert ein Verdrängen des im Tank befindlichen Gases, welches mit Kohlenwasserstoffen gesättigt ist. Für das Auffangen dieser Gase gibt es zwei wesentliche Ansätze: Onboard Refueling Vapor Recovery (ORVR) mit großen Aktivkohlefiltern (AKF) oder das Absaugen des Gases durch die Betankungspistole der Tankstelle. Drittens entstehen Gase während des Parkens oder bei nicht laufendem Verbrennungsmotor durch eine Veränderung der Umgebungstemperatur, sog. Diurnal oder Parking Emissions. Diese können auch über einen Aktivkohlefilter abgepuffert werden, wenn es regelmäßig zu einem ausreichenden Spülprozess des Aktivkohlefilters kommt. Üblicherweise muss hierzu der Verbrennungsmotor in Betrieb sein. Dies kann insbesondere bei Hybridfahrzeugen mit Elektromotor und Verbrennungsmotor relativ aufwendig sein, da der Verbrennungsmotor nicht stets in Betrieb ist.

Eine Möglichkeit zur Reduktion der HC-Emissionen ohne den Tank zu verriegeln besteht in der Realisierung eines drucklosen Tanks mit einem integrierten Volumenelement, welches entstehendes Gasvolumen durch Volumenänderung kompensiert. Das Volumenelement muss hierfür möglichst emissionsdicht gegenüber Kohlenwasserstoffen sein, so dass sich in seinem Inneren stets Luft befindet, welche aus dem Tanksystem direkt in die Atmosphäre herausgedrückt, oder in dieses hineingesaugt werden kann. Außerdem muss das Volumenelement so leicht verformbar sein, dass eine sehr kleine Druckdifferenz von wenigen Millibar ausreicht, um eine vollständige Befüllung und Entleerung zu gewährleisten. Des Weiteren muss das Volumen des Volumenelements so ausgelegt sein, dass das durch Verdampfung bei Temperaturerhöhung bis zur Sättigung entstehende Gasvolumen druckneutral kompensiert werden kann.

WO 2016/012284 nennt verschiedene Ausführungsformen des Volumenkörpers und beschreibt sowohl Blasen aus elastischen Materialien, als auch gefaltete Folienstrukturen und gefaltete Strukturen aus steifen Elementen. Das Dokument DE102016105043 A1 offenbart einen Tank mit einem elastischen Innenbeutel.

Es ist eine Aufgabe der Erfindung einen Tank, insbesondere einen Kraftstofftank, eines Kraftfahrzeuges anzugeben, der bei einfachem Aufbau einen möglichst wartungsarmen und sicheren Betrieb des Kraftfahrzeuges ermöglicht.

Die Lösung dieser Aufgabe erfolgt durch die Merkmale des unabhängigen Anspruchs 1. Die abhängigen Ansprüche haben vorteilhafte Ausgestaltungen der Erfindung zum Gegenstand. Somit wird die Aufgabe gelöst durch einen Tank, insbesondere ausgebildet als Kraftstofftank. Der Tank ist zur Anordnung in einem Kraftfahrzeug und zur Aufnahme einer Flüssigkeit ausgebildet. Bei dem Kraftfahrzeug handelt es sich insbesondere um ein Straßenfahrzeug, beispielsweise Pkw, Lkw oder Kraftrad. Besonders bevorzugt handelt es sich bei dem Kraftfahrzeug um ein Hybridfahrzeug mit Elektromotor und Verbrennungsmotor. Bei der durch den Tank aufzunehmenden Flüssigkeit handelt es sich vorzugsweise um Kraftstoff, beispielsweise um Benzin oder Diesel.

Der Tank umfasst eine Außenwandung. Diese Außenwandung bildet einen Innenraum zur Aufnahme der Flüssigkeit. Des Weiteren umfasst der Tank zumindest ein im Innenraum angeordnetes Volumenelement. Das Volumenelement ist zur Aufnahme von Gas ausgebildet. Bei dem Gas handelt es sich insbesondere um Luft aus der Umgebung des Tanks.

Das durch die Außenwandung gebildete Behältervolumen kann somit, mit Ausnahme des durch das Volumenelement eingenommenen Volumens, zur Aufnahme der Flüssigkeit genutzt werden.

Ferner umfasst der Tank eine Leitung zwischen dem Volumenelement und der Umgebung des Tanks. Die Leitung verbindet das Volumenelement gasführend durch die Außenwandung hindurch mit der Umgebung. Durch die Leitung kann das Gas aus dem Volumenelement nach außen und von außen in das Volumenelement strömen. Dadurch verändert sich die Masse an Gas im Volumenelement, sodass sich auch das Volumen des Volumenelements verändert, wenn sich der Druck im Innenraum und/oder die Füllmenge im Innenraum ändern.

Bei dem Gas handelt es sich insbesondere um Luft, die aus der Atmosphäre entnommen wird bzw. aus der Leitung wieder in die Atmosphäre strömt. Insbesondere strömt die Luft aus dem Volumenbehälter durch einen Filter, vorzugsweise Staubfilter, in die Atmosphäre.

Das Volumenelement kann in allen hier offenbarten Varianten vorzugsweise aus einem flexiblen und/oder elastischen Material gefertigt sein. Das flexible Material ist beispielsweise eine Folie. Das elastische Material kann sich an Knickstellen lokal dehnen, sodass eine Schädigung vermieden werden kann. Das Volumenelement kann auch als Blase bezeichnet werden.

Das Volumenelement kann insbesondere durch eine ebene, gefaltete, geknüllte und/oder gerollte Struktur gebildet werden. Diese Struktur kann aus flexiblem und/oder elastischem Material gefertigt sein.

Insbesondere besitzt das Volumenelement bei vollständig mit Flüssigkeit befülltem Tank sein minimales Volumen und wird bei Entnahme von Flüssigkeit aus dem Tank kontinuierlich mit Gas befüllt. Damit kann sich oberhalb des Flüssigkeitsspiegels im Tank naturgemäß nur eine geringere Menge von Kraftstoffdämpfen bilden als in einem ansonsten gleichen Tank ohne ein derartiges Volumenelement. In Zusammenhang mit einem neuerlichen Befüllen des Tanks wird das Volumenelement dann in die Umgebung entleert. Eine alternative Funktionsweise des Volumenelementes wird nachfolgend erläutert: Bei Änderung des Sättigungsdampfdruckes eines im Tank befindlichen Kraftstoffs (z.B. beim Parken) kann diese Änderung kompensiert werden. Beispielsweise kann, wenn die Kraftstofftemperatur über den Tag stark schwankt (z.B. morgens 20°C, mittags 40°C, nachts 20°C) die Änderung des Sättigungsdampfdrucks mittels des Volumenelementes kompensiert werden. Hierbei besitzt das Volumenelement sein minimales Volumen bei maximaler Kraftstofftemperatur, während sein Volumen bei minimaler Kraftstofftemperatur maximal ist. WO 2016/012284 beschreibt im Detail die Funktion des Volumenelements.

Bei der für die Atmung, also dem Gasaustausch zwischen dem Volumenelement und der Umgebung, notwendigen Volumenveränderung können sich in dem Volumenelement Falten bilden, die zu hohen Spannungszuständen im Knickbereich des Materials führen. Insbesondere entstehen diese Falten bei der Evakuierung, also der Volumenreduzierung des Volumenelements.

Der erfindungsgemäße Tank umfasst vorzugsweise zumindest eine Stabilisierungsanordnung zur Minimierung von Spannungen an diesen Knickstellen des Volumenelements, welche bei der Evakuierung des Volumenelements auftreten können. Insbesondere werden durch die zumindest eine Stabilisierungsanordnung die Spannungen reduziert, indem das Entstehen solcher Knickstellen reduziert wird und/oder die Radien an den Knickstellen möglichst groß gehalten werden und/oder das Volumenelement elastisch ausgebildet wird. Dadurch können eine Schädigung des Volumenelements, insbesondere bei zyklischer mechanischer Belastung (z.B. Druckwechselbeanspruchung des Tanksystems) sowie eine Undichtigkeit des Volumenelements vermieden werden.

In dem Innenraum des Tanks können auch mehrere der hier beschriebenen Volumenelemente angeordnet werden. Die Volumenelemente sowie deren Stabilisierungsanordnungen können gleich oder unterschiedlich ausgestaltet sein. Des Weiteren kann ein einzelnes Volumenelement mehrere der hier beschriebenen Stabilisierungsanordnungen aufweisen. So sind die hier beschriebenen Stabilisierungsanordnungen in Verbindung mit demselben Volumenelement untereinander kombinierbar.

Es ist vorgesehen, dass die Stabilisierungsanordnung eine Beschichtung und/oder einen Innenkörper im Inneren des Volumenelements umfasst. Wenn das Volumenelement bis zu seinem minimalen Volumen evakuiert ist, liegt das Volumenelement zumindest teilweise an dem Innenkörper an. Dadurch wird ein Restvolumen des Volumenkörpers sichergestellt, wobei das "Restvolumen" durch den Innenkörper und ggf. durch Gas in verbleibenden Hohlräumen ausgefüllt ist. Da aufgrund des Innenkörpers das Volumenelement nicht vollständig kollabiert, werden Knickstellen vermieden und etwaige entstehende Knickstellen weisen einen möglichst großen Radius auf.

Bevorzugt ist vorgesehen, dass ein Verhältnis des Volumens des Innenkörpers zum maximalen Volumen des Volumenelements maximal 1/20, vorzugsweise maximal 1/10, besonders vorzugsweise maximal 1/5, beträgt. Für den Fall stark komprimierbarer Innenkörper (z.B. Weichschäume) wird hierbei das komprimierte Volumen für die Rechnung angesetzt, also der Fall des entleerten Volumenelements.

Vorzugsweise ist der Innenkörper elastisch verformbar ausgebildet. Je nach Ausgestaltung des Volumenelements ist es möglich, dass das Volumenelement bei jedem Evakuierungsvorgang unterschiedliche Geometrien bzw. Formen einnimmt. So kann sich das Volumenelement stets unterschiedlich zusammenziehen, zusammenfalten, zusammenrollen oder zusammenknüllen. Bei der Evakuierung des Volumenkörpers kann der Innenkörper leicht deformiert werden und bildet somit einen Gegendruck zur Straffung des Volumenkörpers. Der elastisch verformbare Innenkörper kann für die Volumenelemente stets eine optimale Auflagefläche darstellen, um Knickstellen weitestgehend zu vermeiden.

Der elastisch verformbare Innenkörper ist vorzugsweise durch eine gasgefüllte Blase gebildet. Diese Blase befindet sich im Inneren des Volumenelements und ist geschlossen, sodass sich immer die gleiche Masse an Gas in der Blase befindet. Die geschlossene Blase ist insbesondere mit Luft gefüllt.

Ferner ist vorzugsweise vorgesehen, dass der Innenkörper aus einem elastisch verformbaren Material gefertigt ist. Dieses elastisch verformbare Material ist beispielsweise ein aufgeschäumtes Material, insbesondere ein Schaum oder ein Elastomer.

Des Weiteren ist bevorzugt vorgesehen, dass der Innenkörper nicht nur elastisch verformbar sondern auch elastisch komprimierbar ist. Hierzu ist bevorzugt vorgesehen, dass der Innenkörper aus einem offenporigen (auch: offenzelligen) Schaum gefertigt ist. Insbesondere wenn der Innenkörper elastisch komprimierbar ist, kann ein Verhältnis des Volumens des Innenkörpers (in seinem unkomprimierten Zustand) zum maximalen Volumen des Volumenelements relativ groß ausfallen, insbesondere zumindest 1/4, vorzugsweise zumindest 1/3, betragen.

Ferner ist bevorzugt vorgesehen, dass der Innenkörper als federnde Struktur ausgebildet ist. Die federnde Struktur ist elastisch verformbar. Allerdings ist die federnde Struktur in erster Linie durch ihre geometrische Ausgestaltung und nicht durch die Art ihres Materials elastisch verformbar. Bei der Evakuierung des Volumenelements kann die federnde Struktur elastisch verformt werden und baut somit einen Gegendruck auf das Volumenelement zur Straffung des Volumenelements auf.

Die federnde Struktur ist insbesondere durch einen deformierbaren Hohlkörper gebildet. Der Hohlkörper ist beispielsweise kugelförmig, eiförmig oder walzenförmig. Die Walzenform ist vorzugsweise durch eine gerollte Folie gebildet. Vorzugsweise weist der Hohlkörper eine relativ geringe Wandstärke auf, sodass er aufgrund seiner geometrischen Ausgestaltung deformierbar ist. Vorzugsweise liegt die Wandstärke des Hohlkörpers bei maximal 5 mm, besonders vorzugsweise maximal 3 mm.

Die federnde Struktur kann aus einem steifen Material oder aus einem elastischen Material gefertigt sein. Ferner ist es auch möglich, einen Teil der Struktur aus einem steifen Material und einen anderen Teil der Struktur aus einem elastischen Material zu fertigen.

Bevorzugt ist vorgesehen, dass der Innenkörper als Rahmen ausgebildet ist. Der Rahmen weist insbesondere eine runde oder ovale Form auf. Vorzugsweise ist der Rahmen steif und somit nicht oder annähernd nicht deformierbar. Insbesondere ist der Rahmen im aufgeblasenen Zustand des Volumenelements nicht formgebend für das Volumenelement und sorgt nur bei der Evakuierung des Volumenelements für eine Straffung desselben.

Ferner ist vorgesehen, dass der innenliege Rahmen vieleckig ist und somit mehrere zueinander abgewinkelte Seiten umfasst. Das Volumenelement liegt im aufgeblasenen Zustand am Rahmen an und drückt beim Aufblasen die Seiten nach innen. Dies funktioniert, da das Volumenelement beim Aufblasen sein Volumen in beide Richtungen senkrecht zum Rahmen vergrößert, wodurch der am Rahmen anliegende Umfang des Volumenelements deformiert werden kann.

Der Rahmen kann lose im Inneren des Volumenelements angeordnet werden. Alternativ hierzu ist es auch möglich, den Rahmen stellenweise am Volumenelement zu fixieren, sodass die Position des Rahmens innerhalb des Volumenelements definiert ist.

Der Innenkörper, insbesondere ausgebildet als Rahmen oder elastisches Element, ist vorzugsweise flach. Dadurch ergibt sich eine flachgezogene Form des Volumenelements im evakuierten Zustand mit einem durch den Innenkörper bestimmten Restvolumen.

Innerhalb desselben Volumenelements können auch mehrere der beschriebenen Innenkörper, in gleicher oder unterschiedlicher Ausgestaltung, angeordnet sein.

Des Weiteren ist es möglich, die beschriebenen Ausgestaltungen der Innenkörper zur Gestaltung eines einzigen Innenkörpers zu kombinieren. Vorzugsweise sind zumindest folgende Kombinationen vorgesehen: (i) Insbesondere kann ein Innenkörper die geschlossene, gasgefüllte Blase umfassen, wobei auf der Oberfläche der Blase das elastisch verformbare Material angeordnet ist. (ii) Insbesondere kann ein Innenkörper als federnde Struktur ausgebildet sein und zusätzlich Bereiche mit dem elastisch verformbaren Material aufweisen. (iii) Insbesondere kann der Innenkörper einen steifen Rahmen und zusätzlich Bereiche mit dem elastisch verformbaren Material und/oder Bereiche mit federnder Struktur aufweisen.

Im Folgenden werden weitere vorteilhafte Ausgestaltungen der Stabilisierungsanordnung beschrieben, wie sowohl untereinander als auch mit zumindest einem Innenkörper kombiniert werden können:
Es ist bevorzugt vorgesehen, dass die Stabilisierungsanordnung einen Stabilisierungsrahmen umfasst. Der Stabilisierungsrahmen ist mit dem Volumenelement fest verbunden. Vorzugsweise erstreckt sich der Stabilisierungsrahmen vollumfänglich um das Volumenelement.

Der Stabilisierungsrahmen kann an der Innenseite und/oder Außenseite des Volumenelements und/oder im Inneren der das Volumenelement bildenden Wandung befestigt sein. Besonders bevorzugt ist das Volumenelement durch zwei schalenförmige, flexible Teile gebildet, wobei sich der Stabilisierungsrahmen an und/oder im Nahtbereich zwischen den beiden Teilen befindet. Befindet sich der Stabilisierungsrahmen im Inneren des Volumenelements, so kann er auch als Innenkörper angesehen werden.

Bevorzugt ist vorgesehen, dass der Stabilisierungsrahmen vieleckig ist und somit mehrere zueinander abgewinkelte Seiten umfasst. Vorzugsweise umfasst der Stabilisierungsrahmen zumindest drei oder mehr Seiten. Die Seiten sind vorzugsweise nach innen gewölbt. Das Volumenelement vergrößert beim Aufblasen sein Volumen in beide Richtungen senkrecht zum Stabilisierungsrahmen. Der Stabilisierungsrahmen bleibt dabei im Wesentlichen formstabil, wobei die nach innen gewölbten Seiten leicht nach innen verformt werden können.

Es ist bevorzugt vorgesehen, dass die Stabilisierungsanordnung durch das Volumenelement selbst und eine das Volumenelement umgebende Außenblase gebildet ist. Bei ausreichender Flexibilität und/oder Elastizität des Volumenelements wird weitestgehend vermieden, dass sich beim Zusammenziehen Falten und entsprechende Knickstellen bilden.

In dieser Konfiguration ist das Volumenelement vorzugsweise aus einem Elastomer oder einem silikonhaltigen Material gefertigt. Diese Materialien weisen eine hohe maximale Bruchdehnung auf, was Blasen aus diesem Material resistent gegen Knickbelastungen macht. Als Nachteil erweist sich bei derzeit auf dem Markt befindlichen Elastomeren entweder eine unzureichende Kraftstoffbeständigkeit oder eine im Vergleich zu thermoplastischen Barrierematerialien erhöhte Kohlenwasserstoffemission. Deshalb wird hier vorgeschlagen, eine das Volumenelement umgebende Außenblase zu verwenden, die kraftstoffbeständig ist und als Barriere gegen Kohlenwasserstoff ausgebildet ist. Für diese Außenblase wird insbesondere ein entsprechendes Material verwendet, das eine möglichst geringe Kohlenwasserstoffemission zulässt.

Die Außenblase kann flächig und stoffschlüssig mit dem Volumenelement verbunden sein.

Alternativ ist es auch möglich, dass das Volumenelement lediglich innerhalb der Außenblase angeordnet ist und nicht mit der Außenblase flächig verbunden ist. Beispielsweise ist die Außenblase lediglich im Bereich der Öffnung des Volumenelements an dem Volumenelement befestigt oder die Außenblase ist an der nach außen führenden Leitung befestigt.

Ferner ist es bevorzugt vorgesehen, dass die Stabilisierungsanordnung zumindest stellenweise eine Beschichtung des Volumenelements umfasst. Die Beschichtung kann dabei auf der Innenseite und/oder Außenseite des Volumenelements aufgebracht sein. Dabei kann auf der Innenseite ein anderes Material oder das gleiche Material wie auf der Außenseite verwendet werden. Insbesondere wird dabei berücksichtigt, dass das Material der Beschichtung auf der Innenseite beständig gegenüber dem verwendeten Gas und das Material auf der Außenseite beständig gegenüber der Flüssigkeit sind.

Die Beschichtung ist aus einem elastischen Material gefertigt. Insbesondere umfasst die Beschichtung Fluorkautschuk (FKM), Acrylnitril-Butadien-Kautschuk (NBR) oder Fluorsilikon-Kautschuk (FVMQ).

Bei der Verwendung der Beschichtung ist das Volumenelement vorzugsweise aus einer ebenen, gefalteten, geknüllten oder gerollten Struktur aus nicht oder nur wenig elastischem Material, beispielsweise einer Folie, gefertigt. Durch die Beschichtung werden die möglichen Knickstellen zum einen verstärkt und zum anderen elastisch ausgebildet, um Leckagen am Volumenelement zu vermeiden.

Gemäß einer weiteren bevorzugten Ausführung ist vorgesehen, dass die Stabilisierungsanordnung zumindest ein elastisches Zugelement umfasst, das außerhalb des Volumenelements im Innenraum angeordnet ist. Das Zugelement erstreckt sich somit durch den Innenraum und ist sowohl am Volumenelement als auch an der Außenwandung oder einem sonstigen festen Element innerhalb des Tanks befestigt. Das Zugelement ist dazu ausgebildet, eine Zugkraft auf das Volumenelement auszuüben, insbesondere wenn das Volumenelement nicht vollständig aufgeblasen ist. Insbesondere können mehrere dieser Zugelemente an verschiedenen Stellen des Volumenelements angeordnet werden.

Das zumindest eine Zugelement ist insbesondere so am Volumenelement angeordnet, dass das Volumenelement bei abnehmendem Volumen flach gezogen wird. Dadurch können Knicke des Volumenelements bei der Evakuierung verhindert werden.

Das zumindest eine Zugelement ist vorzugsweise als Feder, beispielsweise metallische Schraubenfeder oder Elastomer-Element, ausgebildet.

Vorzugsweise ist vorgesehen, dass die Stabilisierungsanordnung gebildet ist durch einen zweischaligen Aufbau des Volumenelements. Das Volumenelement umfasst somit eine steife erste Schale und eine flexible zweite Schale. Die beiden Schalen zusammen bilden das gasaufnehmende Volumen des Volumenelements. Die steife Schale bleibt bei der Evakuierung des Volumenelements unverändert, wobei sich die flexible Schale in die steife Schale legen kann und so das Volumen reduziert wird. Bei der Evakuierung hält die steife Schale die flexible Schale in einer definierten Form und vermeidet dadurch ungehinderte Bildung von Knickstellen.

Gemäß einer Ausführung befinden sich die steife Schale oben und die flexible Schale unten. Dadurch ist die flexible Schale der Flüssigkeit im Tank zugewandt. Dabei befindet sich die Öffnung zur Leitung vorzugsweise an der steifen ersten Schale.

Alternativ bevorzugt ist die steife Schale unten angeordnet. Insbesondere die untere Schale kommt somit in Kontakt mit der Flüssigkeit. Bei der steifen Schale ergeben sich mehr Möglichkeiten zur Vermeidung der Permeation mit Kohlenwasserstoffen als bei der flexiblen Schale. So kann die steife Schale z.B. aus einem entsprechenden Material und mit entsprechender Dicke gefertigt werden.

Vorzugsweise ist vorgesehen, die flexible Schale kleiner (mit geringerem Volumen) zu gestalten als die steife Schale, sodass sich die flexible Schale im evakuierten Zustand des Volumenelements spannt und keine oder wenig Falten bildet. Die flexible Schale wird hierzu vorzugsweise aus einem dehnbaren Material, insbesondere aus Elastomer ggf. mit Beschichtung oder aus einer nicht elastomeren Folie, gefertigt.

Gemäß einer Variante für die zweischalige Bildung des Volumenelements ist vorgesehen, die steife Schale aus einem steifen Kunststoff oder Metall zu fertigen und die flexible Schale an der steifen Schale, insbesondere stoffschlüssig, zu befestigen. Die steife Schale kann dabei auch durch eine biegeweiche Folie gebildet werden, die mit einer biegesteifen Struktur, z.B. einem Gitter, verbunden wird, z.B. verschweißt.

Gemäß einer weiteren Variante für die zweischalige Bildung des Volumenelements ist vorgesehen, das gesamte Volumenelement durch eine dehnbare Blase, insbesondere aus Elastomer, zu bilden. Die steife Schale entsteht dabei durch einen steifen Schalen-Rahmen der mit einem Teil der Blase fest verbunden ist. Der Schalen-Rahmen ist schalenförmig. Es ist vorgesehen, an der Innenseite und/oder der Außenseite der Blase solch einen Schalen-Rahmen anzuordnen. Der nicht am Schalen-Rahmen anliegende Teil der Blase fungiert hier als flexible Schale.

Bei der zweischaligen Ausführung bildet der Schnitt zwischen erster und zweiter Schale eine Umfangsgeometrie. Die "Umfangsgeometrie" ist hierbei durch die Naht zwischen den beiden Schalen bzw. durch die Form des Schalen-Rahmens bestimmt. Die Umfangsgeometrie kann rund, oval oder vieleckig sein. Bei vieleckiger Form ist insbesondere vorgesehen, dass die Seiten des Vielecks nach innen gewölbt sind.

Es ist ferner bevorzugt vorgesehen, dass die Stabilisierungsanordnung ein Absperrventil in der Leitung umfasst. Das Absperrventil dient zum Absperren der Leitung und somit zum Verhindern eines Austausches von Gas zwischen der Umgebung und dem Volumenelement. Das Absperrventil kann sich im Innenraum, in der Außenwandung oder außerhalb der Außenwandung befinden. Das Absperrventil dient zum Aufrechterhalten eines Restvolumens, das größer 0 ist, des Volumenelements.

Besonders vorzugsweise umfasst die Stabilisierungsanordnung eine Steuerungsvorrichtung. Diese Steuerungsvorrichtung ist zum Schließen des Absperrventils bei Erreichen des Restvolumens ausgebildet.

Insbesondere umfasst die Steuerungsvorrichtung eine Erfassungseinheit, die, beispielsweise durch Sensoren oder durch Daten von einer übergeordneten Einheit, erfasst, wann das Restvolumen erreicht ist. Basierend auf diesem erfassten Zustand kann die Steuerungsvorrichtung, beispielsweise elektromagnetisch, das Absperrventil schließen. Bevorzugt ist die Steuerungsvorrichtung auch dazu ausgebildet, das Absperrventil wieder zu öffnen und einen Gasaustausch zwischen der Umgebung und dem Volumenelement wieder zu ermöglichen.

Die Steuerungsvorrichtung kann auch mechanisch das Erreichen des Restvolumens erfassen. Dabei ist insbesondere vorgesehen, dass die Bewegung des Volumenelements mechanisch das Ventil betätigt.

Die beschriebenen Stabilisierungsanordnungen können innerhalb eines Tanks an unterschiedlichen Volumenelementen und/oder an demselben Volumenelement miteinander Kombiniert werden. So können beispielsweise an einem Volumenelement zumindest einer der Innenkörper und/oder der Stabilisierungsrahmen und/oder das Volumenelement mit Außenblase und/oder die Beschichtung des Volumenelements und/oder zumindest eines der Zugelemente und/oder der zweischalige Aufbau und/oder das Absperrventil zur Anwendung kommen.

Die Erfindung umfasst des Weiteren einen der beschriebenen Tanks, der nicht zwangsläufig die Stabilisierungsanordnung umfassen muss. Allerdings kann auch dieser Tank eine oder mehrere der beschriebenen Stabilisierungsanordnung umfassen. Bei dem Tank wird berücksichtigt, dass mit oder ohne Stabilisierungsanordnung ein Auswechseln des Volumenelements nötig sein kann, da sich bei dem Volumenelement, beispielsweise durch Spannungen an Knickstellen, Leckagen ergeben können.

Um einen sicheren Betrieb des Kraftfahrzeugs zu ermöglichen, ohne den gesamten Tank auszutauschen, ist vorgesehen, dass das Volumenelement auswechselbar im Innenraum des Tanks angeordnet ist. Hierzu umfasst die Außenwandung eine Service-Öffnung, die zum Herausnehmen und Wiedereinsetzen des Volumenelements in den Innenraum ausgebildet ist. Die Service-Öffnung ist somit groß genug, um das Volumenelement zumindest in seinem evakuierten Zustand auszutauschen. Bei der Service-Öffnung kann es sich um das ohnehin bei den meisten Tanks vorhandene Handloch oder um eine zusätzliche Öffnung in der Außenwandung handeln.

Vorzugsweise umfasst der Tank ein, insbesondere werkzeuglos betätigbares, Verbindungselement im Innenraum an der Leitung. Über dieses Verbindungselement kann das Volumenelement, insbesondere ohne die Verwendung eines Werkzeugs, an die Leitung angeschlossen und wieder abgezogen werden. Beispielsweise umfasst das Verbindungselement eine Überwurfmutter oder einen Bajonettverschluss.

Zusätzlich oder alternativ zur Verwendung des Verbindungselements ist bevorzugt vorgesehen, dass die Service-Öffnung durch einen Deckel, der einen Teil der Außenwandung bildet, verschlossen ist. Die Leitung führt durch diesen Deckel. Besonders vorzugsweise ist das Volumenelement lediglich an diesem Deckel, beispielsweise über die Leitung, befestigt. Durch Entfernen des Deckels wird gleichzeitig das Volumenelement aus dem Innenraum herausgezogen. Das neue Volumenelement kann am Deckel angeschlossen und zusammen mit dem Deckel eingesetzt werden.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Ansicht eines erfindungsgemäßen Tanks mit Volumenelement und einem Innenkörper, ausgebildet als gasgefüllte Blase,
- Fig. 2: eine schematische Ansicht eines erfindungsgemäßen Tanks mit Volumenelement und einem Innenkörper aus elastisch verformbaren Material,
- Fig. 3: eine schematische Ansicht eines erfindungsgemäßen Tanks mit Volumenelement und einem Innenkörper, ausgebildet als federnde Struktur,
- Fig. 4: eine schematische Ansicht eines erfindungsgemäßen Tanks mit Volumenelement und einem Innenkörper, ausgebildet als runder oder ovaler Rahmen,
- Fig. 4A: eine schematische Ansicht eines erfindungsgemäßen Tanks mit Volumenelement und einem Innenkörper, ausgebildet als vieleckiger Rahmen,
- Fig. 4B: eine schematische Ansicht des Volumenelements mit einem Stabilisierungsrahmen,
- Fig. 5: eine schematische Ansicht eines erfindungsgemäßen Tanks mit Volumenelement und Zugelementen,
- Fig. 6: eine schematische Ansicht eines erfindungsgemäßen Tanks mit Volumenelement und Außenblase,
- Fig. 7: eine schematische Ansicht eines erfindungsgemäßen Tanks mit zweischaligem Volumenelement,
- Fig. 8: eine schematische Ansicht eines erfindungsgemäßen Tanks mit zweischaligem Volumenelement mit einem Schalen-Rahmen,
- Fig. 9: eine schematische Ansicht des Schalen-Rahmens aus Fig. 8,
- Fig. 10: eine schematische Ansicht eines erfindungsgemäßen Tanks mit Volumenelement und Absperrventil,
- Fig.11: eine schematische Ansicht eines erfindungsgemäßen Tanks mit auswechselbarem Volumenelement nach einer ersten Variante, und
- Fig.12: eine schematische Ansicht eines erfindungsgemäßen Tanks mit auswechselbarem Volumenelement nach einer zweiten Variante.

Die Figuren zeigen in rein schematischen Ansichten einen Tank 1, ausgebildet als Kraftstofftank für ein Fahrzeug. Der Tank 1 umfasst eine Außenwandung 2, die einen Innenraum 3 zur Aufnahme des Kraftstoffs bildet. Im Innenraum 3 befindet sich ein Volumenelement 4. Das Volumenelement 4 ist über eine Leitung 5 mit der Umgebung verbunden.

In Abhängigkeit des Füllstandes und/oder des Innendrucks im Innenraum 3 verändert sich das Volumen des Volumenelements 4, wobei Gas, insbesondere Luft, aus dem Volumenelement 4 durch die Leitung 5 nach außen gedrückt bzw. angesaugt wird.

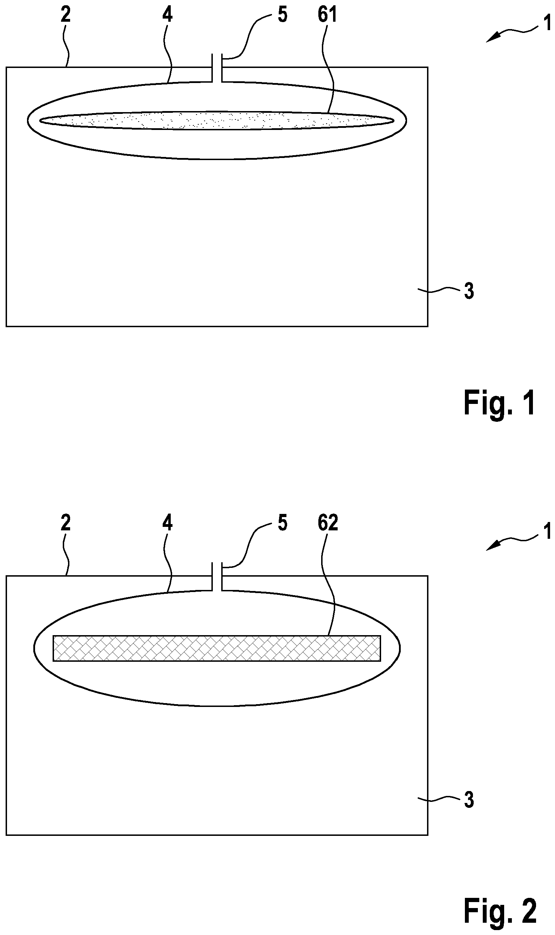

Die Figuren 1 bis 10 beschreiben unterschiedliche Ausgestaltungen einer Stabilisierungsanordnung 6. Wie im einleitenden Teil bereits beschrieben wurde, können diese Stabilisierungsanordnungen 6 untereinander kombiniert werden. Für eine klare und übersichtliche Darstellung der verschiedenen Varianten der Stabilisierungsanordnung 6 werden diese einzeln, trotzdem sie untereinander kombinierbar sind, anhand der Figuren beschrieben.

Vorzugsweise ist vorgesehen, dass die Stabilisierungsanordnung 6 zumindest einen Innenkörper 61-64 im Inneren des Volumenelements 4 umfasst. Beispiele solcher Innenkörper 61-64 werden anhand der Figuren 1 bis 4 genauer beschrieben.

Figur 1 zeigt in schematischer Ansicht den Tank 1 mit Volumenelement 4 und einem Innenkörper 61, ausgebildet als gasgefüllte Blase. Die gasgefüllte Blase ist dabei elastisch verformbar. Die Blase befindet sich im Inneren des Volumenelements 4 und ist geschlossen, sodass sich immer die gleiche Masse an Gas in der Blase befindet. Die geschlossene Blase ist insbesondere mit Luft gefüllt.

Figur 2 zeigt in schematischer Ansicht den Tank 1 mit Volumenelement 4 und einem flachen Innenkörper 62 aus elastisch verformbarem Material. Dieser Innenkörper 62 ist nicht nur elastisch verformbar sondern auch elastisch komprimierbar ist. Hierzu ist der Innenkörper 62 aus einem offenporigen Schwamm gefertigt ist.

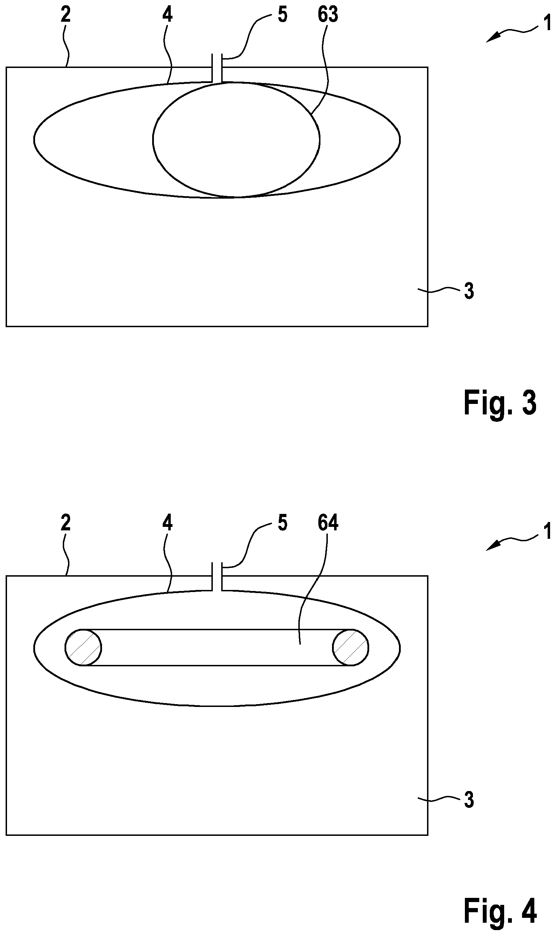

Figur 3 zeigt in schematischer Ansicht den Tank 1 mit Volumenelement 4 und einer federnden Struktur als Innenkörper 63. Die federnde Struktur ist elastisch verformbar. Die federnde Struktur ist durch einen deformierbaren Hohlkörper gebildet. Der Hohlkörper ist hier walzenförmig.

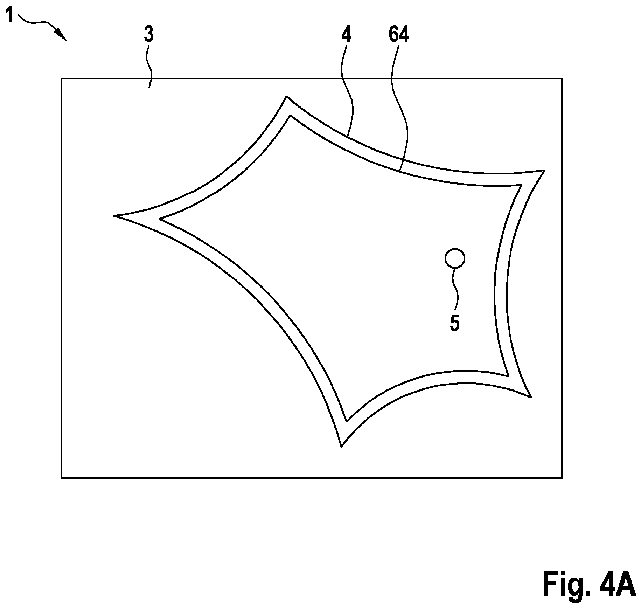

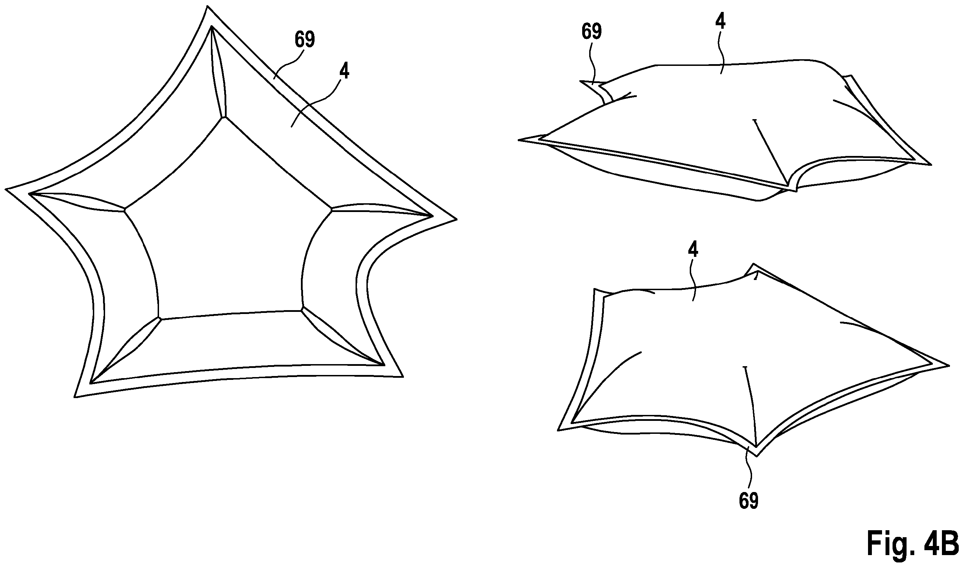

Figur 4 zeigt in schematischer Ansicht den Tank 1 mit Volumenelement 4 und einem flachen Rahmen als Innenkörper 64. Der Rahmen weist eine runde oder ovale Form auf. Der Rahmen ist insbesondere steif und somit nicht oder annähernd nicht deformierbar. Der Rahmen ist im aufgeblasenen Zustand des Volumenelements 4 nicht formgebend für das Volumenelement 4 und sorgt nur bei der Evakuierung des Volumenelements 4 für eine Straffung des Volumenelements 4.

Figur 4A zeigt in schematischer Ansicht den Tank 1 mit Volumenelement 4 und einem flachen Rahmen als Innenkörper 64. Der Rahmen weist eine fünfeckige Form auf. Das Volumenelement 4 liegt im aufgeblasenen Zustand am Rahmen an und drückt beim Aufblasen die Seiten nach innen.

Figur 4B zeigt in schematischer Ansicht das Volumenelement 4 und einen Stabilisierungsrahmen 69 als Stabilisierungsanordnung 6. Der Stabilisierungsrahmen 69 ist mit dem Volumenelement 4 fest verbunden. Der Stabilisierungsrahmen 69 erstreckt sich vollumfänglich um das Volumenelement 4. Das Volumenelement 4 ist hier beispielhaft durch zwei schalenförmige, flexible Teile gebildet, wobei sich der Stabilisierungsrahmen 69 im Nahtbereich zwischen den beiden Teilen befindet.

Der Stabilisierungsrahmen 69 ist fünfeckig. Die Seiten sind nach innen gewölbt. Das Volumenelement 4 vergrößert beim Aufblasen sein Volumen in beide Richtungen senkrecht zum Stabilisierungsrahmen 69. Der Stabilisierungsrahmen 69 bleibt dabei im Wesentlichen formstabil, wobei die nach innen gewölbten Seiten leicht nach innen weiter verformt werden können.

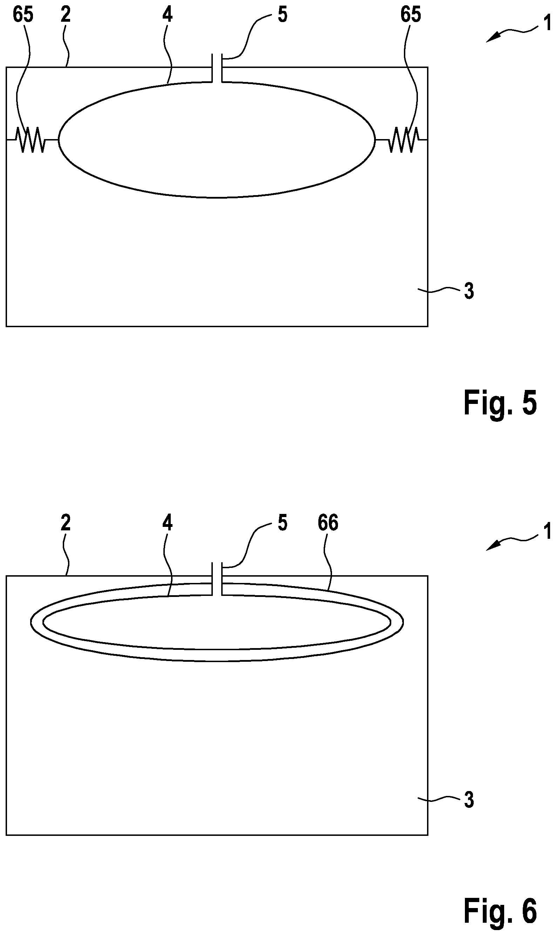

Figur 5 zeigt in schematischer Ansicht den Tank 1 mit Volumenelement 4. Die Stabilisierungsanordnung 6 ist hier gebildet durch Zugelemente 65. Die Zugelemente 65 üben, zumindest wenn das Volumenelement 4 evakuiert wird, eine Zugkraft auf das Volumenelement 4 aus. Dadurch wird das Volumenelement 4 im evakuierten Zustand flach gezogen.

Figur 6 zeigt in schematischer Ansicht den Tank 1 mit Volumenelement 4. Die Stabilisierungsanordnung 6 ist durch das Volumenelement 4 selbst und eine das Volumenelement 4 umgebende Außenblase 66 gebildet ist. Dabei ist das Volumenelement 4 als eine elastische Blase ausgebildet, die sich zusammenziehen und ausdehnen kann. Die das Volumenelement 4 darstellende innere Blase ist lediglich innerhalb der Außenblase 66 angeordnet ist und nicht mit der Außenblase 66 flächig verbunden ist.

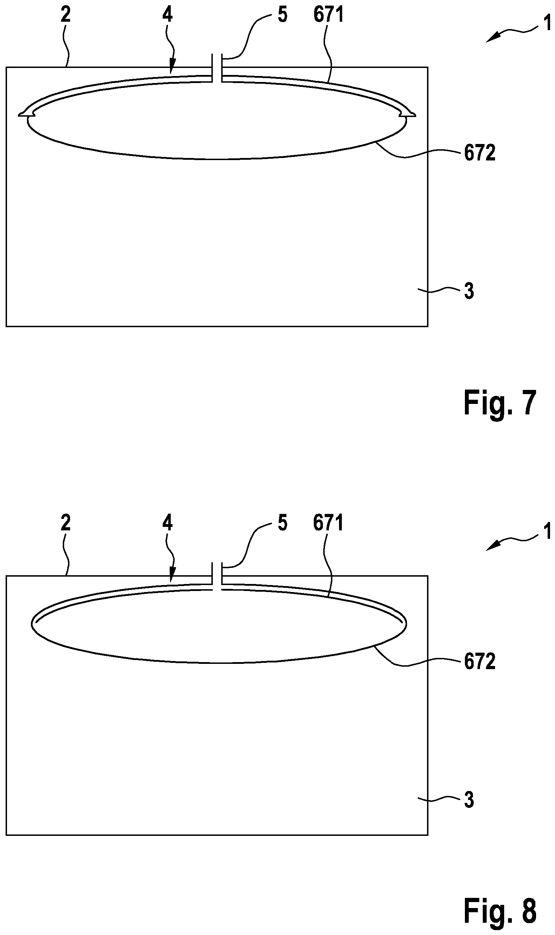

Figur 7 zeigt in schematischer Ansicht den Tank 1 mit Volumenelement 4. Die Stabilisierungsanordnung 6 ist gebildet ist durch einen zweischaligen Aufbau des Volumenelements 4. Das Volumenelement 4 umfasst somit eine steife erste Schale 671 und eine flexible zweite Schale 672. Die Öffnung zur Leitung 5 befindet sich an der steifen ersten Schale 671. Die beiden Schalen 671, 672 bilden zusammen das gasaufnehmende Volumen des Volumenelements 4. Die steife Schale 671 bleibt bei der Evakuierung des Volumenelements 4 unverändert, wobei das Volumen der flexiblen Schale 672 reduziert wird.

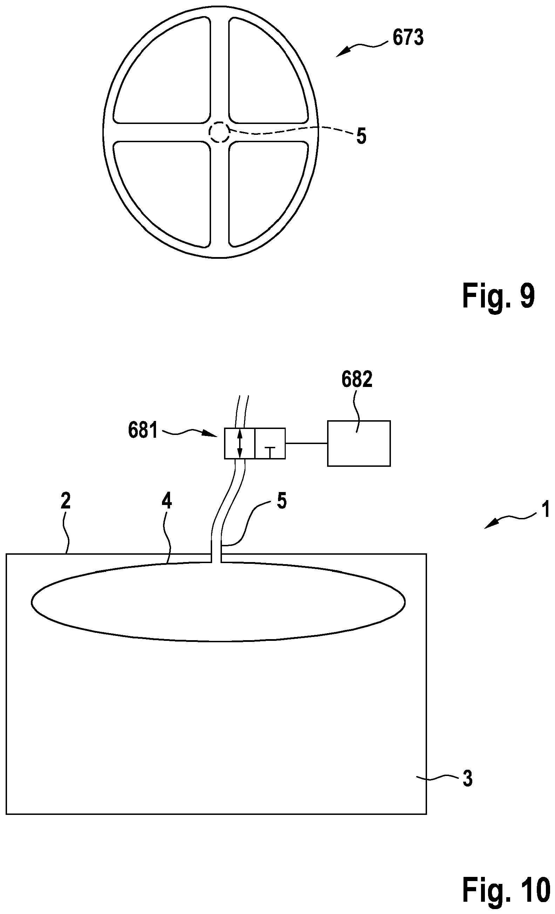

Figur 8 zeigt in schematischer Ansicht den Tank 1 mit Volumenelement 4. Die Stabilisierungsanordnung 6 ist durch einen zweischaligen Aufbau des Volumenelements 4 gebildet. Das gesamte Volumenelement 4 ist durch eine dehnbare Blase, insbesondere aus Elastomer, gebildet. Die steife Schale 671 entsteht dabei durch einen steifen Schalen-Rahmen 673 der mit einem Teil der Blase fest verbunden ist. Figur 9 zeigt in Draufsicht diesen Schalen-Rahmen 673. Der Schalen-Rahmen 673 ist schalenförmig. Es ist vorgesehen, an der Innenseite und/oder der Außenseite der Blase solch einen Schalen-Rahmen 673 anzuordnen. Der nicht am Schalen-Rahmen 673 anliegende Teil der Blase fungiert hier als flexible Schale 672.

Figur 10 zeigt in schematischer Ansicht den Tank 1 mit Volumenelement 4. Die Stabilisierungsanordnung 6 ist durch ein Absperrventil 681 in der Leitung 5 gebildet. Ferner umfasst die Stabilisierungsanordnung 6 eine Steuerungsvorrichtung 682. Diese Steuerungsvorrichtung 682 ist zum Schließen des Absperrventils 681 bei Erreichen des Restvolumens ausgebildet.

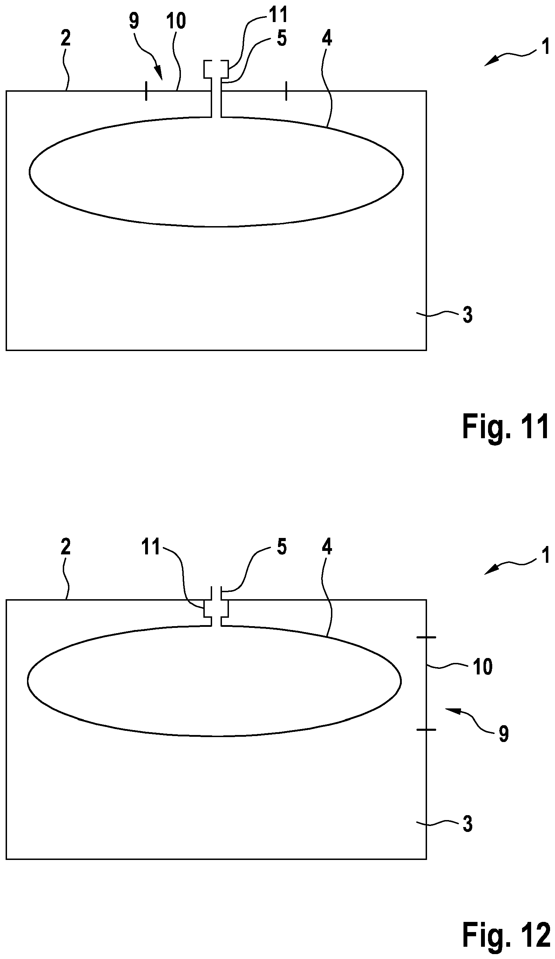

Figuren 11 und 12 zeigen in schematischen Ansichten den Tank 1 mit Volumenelement 4. Dieser Tank 4 kann keine, eine oder mehrere der beschriebenen Stabilisierungsanordnungen 6 umfassen.

Das Volumenelement 4 ist auswechselbar im Innenraum 3 des Tanks 4 angeordnet. Hierzu umfasst die Außenwandung 2 eine Service-Öffnung 9, die zum Herausnehmen und Wiedereinsetzen des Volumenelements 4 in den Innenraum 3 ausgebildet ist.

Gemäß Figur 11 ist die Service-Öffnung 9 durch einen Deckel 10, der einen Teil der Außenwandung 2 bildet, verschlossen ist. Die Leitung 5 führt durch diesen Deckel 10. Vorzugsweise ist das Volumenelement 4 lediglich an diesem Deckel 10, beispielsweise über die Leitung 5, befestigt. Durch Entfernen des Deckels 10 wird gleichzeitig das Volumenelement 4 aus dem Innenraum 3 herausgezogen. Das neue Volumenelement 4 kann am Deckel 10 angeschlossen und zusammen mit dem Deckel eingesetzt werden.

Der Tank 1 gemäß Figur 12 umfasst ein werkzeuglos betätigbares Verbindungselement 11 im Innenraum 3 an der Leitung 5. Über dieses Verbindungselement 11 kann das Volumenelement 4, ohne der Verwendung eines Werkzeugs, an die Leitung 5 angeschlossen und wieder abgezogen werden. Solch ein Verbindungselement 11 kann auch bei der Konstruktion noch Figur 11 im Innenraum 3 oder außerhalb des Innenraums 3 verwendet werden.

### Bezugszeichenliste

- 1: Tank
- 2: Außenwandung
- 3: Innenraum
- 4: Volumenelement
- 5: Leitung
- 6: Stabilisierungsanordnung
- 9: Service-Öffnung
- 10: Deckel
- 11: Verbindungselement
- 61: Innenkörper, ausgebildet als gasgefüllte Blase
- 62: Innenkörper aus elastisch verformbaren Material
- 63: Innenkörper, ausgebildet als federnde Struktur
- 64: Innenkörper, ausgebildet als Rahmen
- 65: Zugelement
- 66: Außenblase
- 69: Stabilisierungsrahmen
- 671: steife erste Schale
- 672: flexible zweite Schale
- 673: Schalen-Rahmen
- 681: Absperrventil
- 682: Steuerungsvorrichtung

## Patentansprüche

1. Tank (1), insbesondere Kraftstofftank, zur Aufnahme einer Flüssigkeit in einem Kraftfahrzeug, umfassend
• eine Außenwandung (2), die einen Innenraum (3) zur Aufnahme der Flüssigkeit bildet,
• zumindest ein im Innenraum (3) angeordnetes Volumenelement (4) zur Aufnahme von Gas, insbesondere Luft,
• eine das Gas führende Leitung (5) zwischen dem Volumenelement (4) und der Umgebung des Tanks (1) zur Veränderung des Volumens des Volumenelements (4), und
• zumindest eine Stabilisierungsanordnung (6) zur Minimierung von Spannungen an Knickstellen des Volumenelements (4) bei Evakuierung des Volumenelements (4)
**dadurch gekennzeichnet, dass** die Stabilisierungsanordnung (6) eine Beschichtung des Volumenelements (4) auf dessen Innenseite und/oder Außenseite umfasst, wobei die Beschichtung ein elastisches Material umfasst, wobei das Volumenelement (4) aus einer Folie gefertigt ist, wobei die Beschichtung Fluorkautschuk (FKM), Acrylnitril-Butadien-Kautschuk (NBR) oder Fluorsilikon-Kautschuk (FVMQ) umfasst.

2. Tank nach Anspruch 1, wobei die Stabilisierungsanordnung (6) zumindest einen Innenkörper (61-64) im Inneren des Volumenelements (4) umfasst, wobei das Volumenelement (4) im evakuierten Zustand an diesem Innenkörper (61-64) anliegt.

3. Tank nach Anspruch 2, wobei der Innenkörper (61-64) elastisch verformbar ist.

4. Tank nach einem der Ansprüche 2 oder 3, wobei der Innenkörper (61) eine geschlossene, gasgefüllte Blase ist.

5. Tank nach einem der Ansprüche 2 bis 4, wobei der Innenkörper (62) aus einem elastisch verformbaren Material, vorzugsweise einem offenporigen Schaum oder Elastomer, gefertigt ist.

6. Tank nach einem der Ansprüche 2 bis 5, wobei der Innenkörper (63) als federnde Struktur, vorzugsweise als elastisch verformbarer Hohlkörper, ausgebildet ist.

7. Tank nach einem der Ansprüche 2 bis 6, wobei der Innenkörper (64) als Rahmen ausgebildet ist, vorzugsweise in runder oder ovaler oder vieleckiger Form.

8. Tank nach einem der vorhergehenden Ansprüche, wobei die Stabilisierungsanordnung (6) zumindest einen fest mit dem Volumenelement (4) verbundenen Stabilisierungsrahmen (69) umfasst.

9. Tank nach einem der vorhergehenden Ansprüche, wobei die Stabilisierungsanordnung (6) gebildet ist durch das Volumenelement (4) und eine das Volumenelement (4) umgebende Außenblase (66) als Barriere gegen Kohlenwasserstoff.

10. Tank nach einem der vorhergehenden Ansprüche, wobei die Stabilisierungsanordnung (6) zumindest ein elastisches Zugelement (65) umfasst, das sich durch den Innenraum (3) erstreckt und zwischen dem Volumenelement (4) und der Außenwandung (2) angeordnet ist.

11. Tank nach einem der vorhergehenden Ansprüche, wobei die Stabilisierungsanordnung (6) gebildet ist durch einen zweischaligen Aufbau des Volumenelements (4), mit einer steifen ersten Schale (671) und einer flexiblen zweiten Schale (672).

12. Tank nach Anspruch 11, wobei
• die flexible zweite Schale (672) an der steifen ersten Schale (671), vorzugsweise stoffschlüssig, befestigt ist, oder
• das gesamte Volumenelement (4) durch eine Blase gebildet ist, wobei zur Bildung der festen Schale (671) ein Teil der Blase stets an einem Schalen-Rahmen (673) anliegt, vorzugsweise an dem Schalen-Rahmen (673) befestigt ist.

13. Tank nach einem der vorhergehenden Ansprüche, wobei die Stabilisierungsanordnung (6) ein Absperrventil (681) in der Leitung (5) zum Aufrechterhalten eines Restvolumens des Volumenelements (5) umfasst.

14. Tank nach Anspruch 13, wobei die Stabilisierungsanordnung (6) eine Steuerungsvorrichtung (682) umfasst, die zum Schließen des Absperrventils (681) bei Erreichen des Restvolumens ausgebildet ist.

15. Tank nach Anspruch 1,
• wobei das Volumenelement (4) auswechselbar im Innenraum (3) angeordnet ist und die Außenwandung (2) eine Service-Öffnung (9) umfasst, die zum Herausnehmen und Wiedereinsetzen des Volumenelements (4) in den Innenraum (3) ausgebildet ist.

16. Tank nach Anspruch 15, wobei das Volumenelement (4) über ein, vorzugsweise werkzeuglos betätigbares, Verbindungselement (11) im Innenraum (3) an der Leitung (5) angeschlossen ist.

17. Tank nach einem der Ansprüche 15 oder 16, wobei die Leitung (5) durch einen die Service-Öffnung (9) verschließenden Deckel (10) führt und das Volumenelement (4), vorzugsweise mittels der Leitung (5), an dem Deckel (10) befestigt ist.

## Claims

1. A tank (1), in particular a fuel tank, for receiving a liquid in a motor vehicle, comprising
• an outer wall (2) that forms an internal space (3) for receiving the liquid,
• at least one volume element (4) situated in the internal space (3) for receiving gas, in particular air,
• a gas-guiding line (5) between the volume element (4) and the surroundings of the tank (1) for changing the volume of the volume element (4), and
• at least one stabilizing assembly (6) for minimizing stresses at kinks of the volume element (4) when evacuating the volume element (4),
**characterized in that**,
• the stabilizing assembly (6) has a coating of the volume element (4) on its inner side and/or outer side, wherein the coating includes an elastic material, wherein the volume element (4) is made of a film, wherein the coating includes fluororubber (FKM), acrylonitrile butadiene rubber (NBR), or fluorosilicone rubber (FVMQ).

2. The tank according to Claim 1, wherein the stabilizing assembly (6) includes at least one internal body (61-64) in the interior of the volume element (4), wherein the volume element (4) in the evacuated state rests against this internal body (61-64).

3. The tank according to Claim 2, wherein the internal body (61-64) is elastically deformable.

4. The tank according to one of Claims 2 or 3, wherein the internal body (61) is a closed, gasfilled bladder.

5. The tank according to one of Claims 2 to 4, wherein the internal body (62) is made of an elastically deformable material, preferably an open-pore foam or an elastomer.

6. The tank according to one of Claims 2 to 5, wherein the internal body (63) is designed as a resilient structure, preferably as an elastically deformable hollow body.

7. The tank according to one of Claims 2 to 6, wherein the internal body (64) is designed as a frame that preferably has a round, oval, or polygonal shape.

8. The tank according to one of the preceding claims, wherein the stabilizing assembly (6) includes at least one stabilizing frame (69) that is fixedly connected to the volume element (4).

9. The tank according to one of the preceding claims, wherein the stabilizing assembly (6) is formed by the volume element (4) and an outer bladder (66) that encloses the volume element (4) as a barrier against hydrocarbons.

10. The tank according to one of the preceding claims, wherein the stabilizing assembly (6) includes at least one elastic tension element (65) that extends through the internal space (3) and is situated between the volume element (4) and the outer wall (2).

11. The tank according to one of the preceding claims, wherein the stabilizing assembly (6) is formed by a two-shell design of the volume element (4), having a rigid first shell (671) and a flexible second shell (672).

12. The tank according to Claim 11, wherein
• the flexible second shell (672) is fastened, preferably integrally bonded, to the rigid first shell (671), or
• the entire volume element (4) is formed by a bladder, wherein for forming the fixed shell (671), a portion of the bladder always rests against a shell frame (673) and is preferably fastened to the shell frame (673).

13. The tank according to one of the preceding claims, wherein the stabilizing assembly (6) includes a shutoff valve (681) in the line (5) for maintaining a residual volume of the volume element (5).

14. The tank according to Claim 13, wherein the stabilizing assembly (6) includes a control device (682) that is designed to close the shutoff valve (681) when the residual volume is reached.

15. The tank according to Claim 1,
• wherein the volume element (4) is exchangeably situated in the internal space (3), and
the outer wall (2) includes a service opening (9) that is designed for removing and reinserting the volume element (4) from/into the internal space (3).

16. The tank according to Claim 15, wherein the volume element (4) is attached to the line (5) via a connecting element (11) that is preferably actuatable without tools.

17. The tank according to one of Claims 15 or 16, wherein the line (5) leads through a cover (10) that closes the service opening (9), and the volume element (4) is fastened to the cover (10), preferably by means of the line (5).

## Revendications

1. Réservoir (1), notamment réservoir de carburant, destiné à recevoir un liquide dans un véhicule automobile, comprenant
• une paroi extérieure (2) formant un espace intérieur (3) pour recevoir le liquide,
• au moins un élément de volume (4) disposé dans l'espace intérieur (3) pour recevoir du gaz, en particulier de l'air,
• un conduit (5) transportant le gaz entre l'élément de volume (4) et l'environnement du réservoir (1) pour modifier le volume de l'élément de volume (4), et
• au moins un ensemble de stabilisation (6) pour minimiser les tensions aux points de pliage de l'élément de volume (4) lors de l'évacuation de l'élément de volume (4)
**caractérisé en ce que** l'ensemble de stabilisation (6) comprend un revêtement de l'élément de volume (4) sur sa face interne et/ou externe, le revêtement comprenant un matériau élastique, l'élément de volume (4) étant constitué d'un film, le revêtement comprenant du caoutchouc fluoré (FKM), du caoutchouc acrylonitrile-butadiène (NBR) ou du caoutchouc fluorosilicone (FVMQ).

2. Réservoir selon la revendication 1, dans lequel l'ensemble de stabilisation (6) comprend au moins un corps intérieur (61-64) à l'intérieur de l'élément de volume (4), l'élément de volume (4) étant en appui contre ce corps intérieur (61-64) à l'état sous vide.

3. Réservoir selon la revendication 2, dans lequel le corps intérieur (61-64) est élastiquement déformable.

4. Réservoir selon l'une des revendications 2 ou 3, dans lequel le corps intérieur (61) est une bulle fermée remplie de gaz.

5. Réservoir selon l'une quelconque des revendications 2 à 4, dans lequel le corps intérieur (62) est réalisé en un matériau élastiquement déformable, de préférence en mousse à pores ouverts ou en élastomère.

6. Réservoir selon l'une quelconque des revendications 2 à 5, dans lequel le corps intérieur(63) est réalisé sous la forme d'une structure élastique, de préférence sous la forme d'un corps creux élastiquement déformable.

7. Réservoir selon l'une quelconque des revendications 2 à 6, dans lequel le corps intérieur (64) est réalisé sous forme de cadre, de préférence de forme ronde ou ovale ou polygonale.

8. Réservoir selon l'une quelconque des revendications précédentes, dans lequel l'ensemble de stabilisation (6) comprend au moins un cadre de stabilisation (69) solidaire de l'élément de volume (4).

9. Réservoir selon l'une quelconque des revendications précédentes, dans lequel l'ensemble de stabilisation (6) est formé par l'élément de volume (4) et une bulle extérieure (66) entourant l'élément de volume (4) comme barrière contre les hydrocarbures.

10. Réservoir selon l'une quelconque des revendications précédentes, dans lequel l'ensemble de stabilisation (6) comprend au moins un élément de traction élastique (65) s'étendant à travers l'espace intérieur (3) et disposé entre l'élément de volume (4) et la paroi extérieure (2).

11. Réservoir selon l'une quelconque des revendications précédentes, dans lequel l'ensemble de stabilisation (6) est formé par une structure à double coque de l'élément de volume (4), avec une première coque rigide (671) et une seconde coque flexible (672).

12. Réservoir selon la revendication 11, dans lequel
• la deuxième coque flexible (672) est fixée à la première coque rigide (671), de préférence par liaison de matière, ou
• l'ensemble de l'élément de volume (4) est formé par une bulle, une partie de la bulle reposant toujours sur un cadre de coque (673) pour former la coque fixe (671), de préférence fixée au cadre de coque (673).

13. Réservoir selon l'une quelconque des revendications précédentes, dans lequel l'ensemble de stabilisation (6) comprend une vanne d'arrêt (681) dans le conduit (5) pour maintenir un volume résiduel de l'élément de volume (5).

14. Réservoir selon la revendication 13, dans lequel l'ensemble de stabilisation (6) comprend un dispositif de commande (682) configuré pour fermer la vanne d'arrêt (681) lorsque le volume résiduel est atteint.

15. Réservoir selon la revendication 1,
• dans lequel l'élément de volume (4) est disposé de manière interchangeable dans l'espace intérieur (3) et la paroi extérieure (2) comprend une ouverture de service (9) conçue pour retirer et réinsérer l'élément de volume (4) dans l'espace intérieur (3).

16. Réservoir selon la revendication 15, dans lequel l'élément de volume (4) est raccordé à la conduite (5) par l'intermédiaire d'un élément de raccordement (11), de préférence actionnable sans outil, dans l'espace intérieur (3) .

17. Réservoir selon l'une des revendications 15 ou 16, le conduit (5) passant à travers un couvercle (10) obturant l'ouverture de service (9) et l'élément de volume (4) étant fixé au couvercle (10), de préférence au moyen du conduit (5).
